# EUROPÄISCHE PATENTSCHRIFT

(11) **EP 1 311 803 B1**
(45) Veröffentlichungstag und Bekanntmachung des Hinweises auf die Patenterteilung: **30.01.2008**
(21) Anmeldenummer: 00967542.2
(22) Anmeldetag: 24.08.2000
(51) Int. Cl.: G01C 21/36, G06F 3/00, G06K 9/00

(54) **Verfahren und Navigationsgerät zum Abfragen von Zielinformation und zum Navigieren in einer Kartenansicht**
Method and navigation device for querying target information and navigating within a map view
Procédé de recherche d'informations de destination et pour la navigation dans une représentation cartographique, et dispositif de navigation correspondant

(43) Veröffentlichungstag der Anmeldung: 21.05.2003
(73) Patentinhaber: Siemens VDO Automotive AG, 93055 Regensburg (DE)
(72) Erfinder: RITTER, Dieter, 90762 Fürth (DE)
(86) Internationale Anmeldenummer: PCT/DE2000/002906
(87) Internationale Veröffentlichungsnummer: WO 2002/016875

(56) Entgegenhaltungen:
- EP-A- 0 897 170
- WO-A-98/35311
- WO-A-99/34276
- WO-A-99/35633
- US-A- 5 850 206
- US-A- 6 009 210
- PATENT ABSTRACTS OF JAPAN vol. 2000, no. 06, 22. September 2000 (2000-09-22) & JP 2000 075991 A (AQUEOUS RESEARCH:KK), 14. März 2000 (2000-03-14)
- PATENT ABSTRACTS OF JAPAN vol. 1995, no. 06, 31. Juli 1995 (1995-07-31) & JP 07 084714 A (CASIO COMPUT CO LTD), 31. März 1995 (1995-03-31)

## Beschreibung

Die Erfindung betrifft ein Verfahren zum Abfragen von Zielinformation innerhalb einer auf einer Anzeigeeinrichtung dargestellten Kartenansicht mit den Schritten:
- auf eine Benutzereingabe wird eine Kartenansicht in eine Richtung bewegt, um Daten aufzufinden, die mit einem dreidimensionalen Objekt verknüpft sind,
- ein angezeigtes, dreidimensionales Objekt wird in der Kartenansicht aufgrund einer Benutzereingabe ausgewählt,
- mit dem ausgewählten Objekt verknüpfte, in einer Datenbank gespeicherte Daten werden ausgegeben, wobei das dreidimensionale Objekt ein Gebäude ist.

Ein derartiges Verfahren ist aus der EP 0 897 170 A2 und der US 5 850 206 bekannt.

Navigationsberechnungen zur Bestimmung einer Fahrtroute von einem Startpunkt zu einem Zielpunkt basieren auf zweidimensionalen Geoinformationsdaten. Der Anwender eines auf einem Computer laufendem Routensuchprogramms oder eines in einem Fahrzeug angeordneten Navigationsgeräts muss das Ziel seiner Reise durch Eingabe von Buchstaben oder durch Vornahme einer Auswahl aus einer vordefinierten Liste auswählen. Hierzu muss , er aber die Bezeichnung seines Ziels schon kennen. Dies ist in fremden Orten häufig nicht der Fall. In gleicher Weise kann er Zielinformationen zu den in den Daten enthaltenen Punkten (points of interest), beispielsweise Tankstellen, Museen, Hotels, Parkhäuser oder dergleichen abfragen. In Großstädten wird er aber hierzu regelmäßig ein unüberschaubar großes Angebot erhalten. eine Möglichkeit, visuell eine Bestimmte Gegend unter Veränderung einer Kartenansicht abzusuchen, also in einer Karte zu navigieren, wird nicht geboten.

Aus der europäischen Patentschrift EP 0 366 132 B1 ist eine Multifunktions-Bedieneinrichtung für Kraftfahrzeuge bekannt, das einen Drehschalter aufweist, mit dem die Buchstabenfolge eines Zielpunkts für ein Navigationsgerät eingegeben werden kann. Eine Orientierung des Benutzers innerhalb einer auf einer Anzeigeeinrichtung ausgegebenen Ansicht einer Straßenkarte ist hiermit nicht möglich.

Aus der internationalen Anmeldung WO 99/19788 ist ein System zur Echtzeiterkennung von Gesten bekannt. Wird eine von einer Person ausgeführten Geste von dem System erkannt, so wird eine Operation von einem Computer ausgeführt, die auf der semantischen Bedeutung der Geste beruht. So wird z. B. das von einer Person ausgeführte Auf- und Niederschlagen der Arme eines Menschen in das Bild eines fliegenden Vogels umgesetzt.

Es ist das Ziel der Erfindung ein benutzerfreundliches Verfahren zur Verfügung zu stellen, das eine einfache, visuelle Orientierung innerhalb einer auf einer Anzeigeeinrichtung dargestellten Kartenansicht ermöglicht.

Dieses Ziel wird mit dem Verfahren nach Anspruch 1 erreicht. Vorteilhafte Ausführungsformen der Erfindung sind in den Unteransprüchen ausgegeben.

Dadurch, dass ein Benutzer eine Kartenansicht bewegen kann und ein angezeigtes Objekt direkt in einer Kartenansicht auswählen kann, um mit diesem Objekt verknüpfte Informationen oder Daten abzurufen, entfällt eine umständliche Suche in Listen. Der Benutzer kann sicher sein, dass die abgerufene Information zu dem ausgewählten Objekt an dem von ihn betrachteten Ort gehört. Er muss den Namen oder die Adresse des Objekts nicht kennen, da er seine Auswahl aufgrund der dargebotenen optischen, dreidimensionalen Darstellung von Objekten treffen kann. Der Benutzer kann somit eine ihm fremde Gegend visuell erkunden und relevante, auf betrachtete Objekte bezogene Informationen einholen.

Die für den Benutzer interessanten Daten sind nach grafischen, dreidimensionalen Objekten organisiert und geordnet. Es besteht eine datenbankmäßige Verknüpfung zwischen einem grafischen Objekt hierzu gehörigen Daten.

Bei dem Objekt handelt es sich um ein Gebäude und bei den ausgegebenen Daten um die Innenansicht eines Gebäudes, beispielsweise um Zimmer eines Hotels oder einen virtuellen Rundgang durch ein Museum. Ferner können die anzeigbaren Informationen beispielsweise die im Gebäude untergebrachten Einrichtungen, wie ein Museum, ein Hotel, ein Restaurant, ein Kino oder ein Geschäft betreffen.

Die anzeigbare Information kann beispielsweise eine Telekommunikationsadresse in Form einer Homepage im Internet, eine Email-Adresse, eine Faxnummer oder eine Telefonnummer sein.

Weist von der angezeigten Information eine Verknüpfung (Link) auf eine zugehörige Homepage im Internet, so kann ein Benutzer aktuelle Informationen zu den im Gebäude untergebrachten Einrichtungen abrufen. Dabei kann es sich beispielsweise um das aktuelle Kinoprogramm, die aktuelle Speisekarte eines Restaurants, die Angebote eines Geschäfts oder die Belegung eines Hotels handeln. Wird als Information eine Telefonnummer ausgegeben, so kann durch Bestätigung der Telefonnummer ein Anruf ausgelöst werden, um beispielsweise eine Reservierung in einem Restaurant oder Hotel vorzunehmen.

Die Auswahl zwischen den in einer Kartenansicht angebotenen dreidimensionalen Objekten und das Navigieren in einer Kartenansicht kann durch einen Drehschalter, mit dem zwischen den angezeigten Objekten gewechselt werden kann, einem Joystick, Pfeiltasten, einem Touch Pad, durch Berühren der angezeigten Objekte auf einem berührungssensitiven Bildschirm (Touchscreen) oder durch Spracheingabe erfolgen. Vorzugsweise erfolgt aber die Auswahl eines Objekts durch die Erfassung und Auswertung von Gesten des Benutzers.

Ein Navigieren in der Kartenansicht ist möglich, indem Gesten des Benutzers erfasst und ausgewertet werden. Die Kartenansicht wird in diejenige Richtung bewegt, in die der Benutzer seine Hand bewegt oder in die er deutet.

Auf diese Weise kann sich der Benutzer virtuell durch die Kartenansicht bewegen und sogar ein ausgewähltes Gebäude betreten. Er kann sich einen Überblick über die nähere Umgebung eines Zielorts oder seines momentanen Aufenthalts machen. Er kann zu den Objekten, zu denen er sich virtuell hinbewegt hat, in der oben geschilderten Weise Zielinformationen abfragen oder auch Kontakt über Internet oder Telefon aufnehmen.

Ferner kann ein ausgewähltes Objekt, beispielsweise ein Platz, ein Gebäude oder eine Punkt einer Straße als Zielkoordinate für eine Routenberechnung verwendet werden.

Vorzugsweise werden die beschriebenen Verfahren mit einem Navigationsgerät ausgeführt, das mit einer Kamera zum Erfassen von Gesten des Benutzers verbunden ist.

Weitere Vorteile, Merkmale und Anwendungsmöglichkeiten der Erfindung ergeben sich aus der nachfolgenden Beschreibung eines Ausführungsbeispiels in Verbindung mit den Zeichnungen. Es zeigen:
- Figur 1: ein Navigationsgerät,
- Figur 2a bis 2c: die Steuerung eines 3D-Browsers mittels Gesten,
- Figur 3: die Verfolgung einer dynamischen Geste im dreidimensionalen Raum
- Figur 4: ein ausgewähltes Objekt,
- Figur 5: die räumliche Zuordnung von ausgegebenen Daten, und
- Figur 6: ein ausgewähltes Objekt.

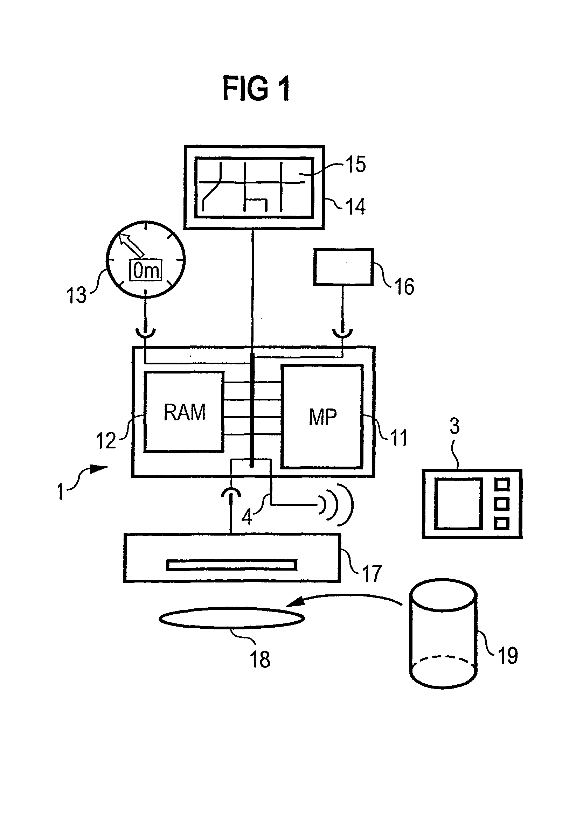

Figur 1 zeigt ein Navigationsgerät 1, das einen Prozessor 11 zur Berechnung von Routen zwischen einem Startpunkt und einem Zielpunkt sowie zur Berechnung von Kartenansichten aufweist. Dem Prozessor 11 steht ein Arbeitsspeicher 12 zur Verfügung. Eine über ein Bussystem mit dem Prozessor verbundene Sensoreinheit 13 umfasst einen Entfernungsmesser (Odometer), einen Richtungsmesser (Gyroskop) und einen Satellitenempfänger.

Auf einer Anzeigeeinrichtung 14 gibt der Prozessor 11 eine Kartenansicht 15 aus.

Das Navigationsgerät ist ferner mit einem Telefonmodul 16 ausgerüstet, das nach dem UMTS-Standard arbeitet.

Der Prozessor erhält die für die Routenberechnung und Bilddarstellung notwendigen Daten entweder drahtlos über das Telefonmodul 16 übertragen oder liest diese über ein Laufwerk 17 von einem Speichermedium 18, bei dem es sich um eine DVD (Digital Versatile Disc) handelt. Auf der DVD ist ein Programmprodukt mit einer Navigationssoftware gespeichert, die das Abfragen von Zielinformation und das Navigieren in einer Kartenansicht erlaubt. Ferner sind zwei unterschiedliche Datenbanken 19 auf der DVD gespeichert, von denen eine symbolisch dargestellt ist. Ist das Speichermedium überschreibbar, können die darauf enthaltenen Daten über das Telefonmodul 16 oder über eine drahtlose Schnittstelle 4 (z. B. Bluetooth) aktualisiert werden.

Eine Datenbank enthält zweidimensionale Straßenkartendaten, die aus einem Netzwerk aus Straßensegmenten mit Knoten- oder Schnittpunkten bestehen. Die zweite Datenbank ist eine Geo-Datenbank, die dreidimensionale Objekte in Form von Gebäude- und Topologie-Daten enthält. Zusätzlich kann noch eine Texturdatenbank vorhanden sein, die ein Bild der Oberfläche zu den dreidimensionalen Gebäude- und Topologie-Daten enthält.

Einem tragbaren Datenverarbeitungsgerät 3, bei dem es sich um einen PDA (Personal Digital Assistent) handelt, können einzelne ausgewählte Kartenansichten zusammen mit den zu den dreidimensionalen Objekten gehörigen Daten über die Schnittstelle 4 übertragen werden.

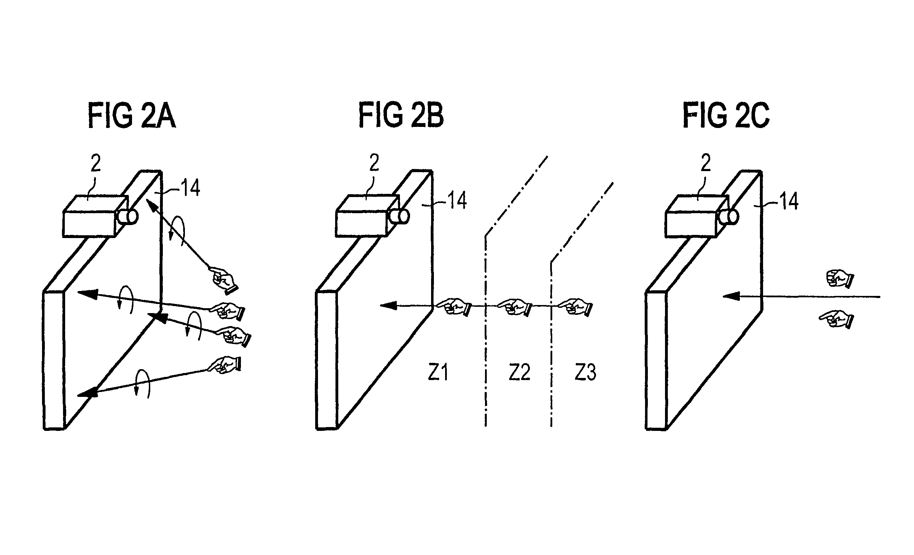

Figur 2 zeigt eine schematische Darstellung der Anzeigeeinrichtung 14 und einer Videokamera 2, die an das Navigationsgerät angeschlossen ist.

Die Kamera zeichnet Gesten eines Benutzers, die mit einer Hand ausgeführt werden auf. Diese Gesten werden durch den Mikroprozessor des Navigationsgeräts oder durch einen weiteren Mikroprozessor ausgewertet. Ein geeignetes Verfahren ist hierzu beispielsweise in der internationalen Patentanmeldung WO 99/19788 offenbart.

Die Kartenansicht wird in diejenige Richtung bewegt, in die der Benutzer mit seiner Hand oder einem Finger der Hand deutet. Deutet der Benutzer nach links, so wandert sein virtueller Blickwinkel nach links, so dass in der Karte weiter links verzeichnete Objekte, die noch nicht im Blickfeld lagen, im Blickfeld erscheinen und dementsprechend Objekte auf der rechten Seite aus dem Blickfeld verschwinden. In der gleichen Weise kann das Blickfeld nach oben oder nach unten oder nach links oben oder rechts unten usw. geschwenkt werden.

Es können nicht nur die Änderung des Azimutwinkels oder des Elevationswinkels in der beschriebenen Weise ausgewertet werden, sondern auch die Änderung eines Rollwinkels, wenn beispielsweise mit einer Hand oder einem Finger eine kreisförmige Bewegung ausgeführt wird. In Antwort auf eine solche kreisförmige Bewegung erfolgt eine Drehung der Kartenansicht um die Blickrichtung. Auf diese Weise kann ein im Zentrum der Kartenansicht befindliches Objekt von allen Seiten betrachtet werden.

Daneben kann die Kartenansicht in die Tiefe des Raumes hinein oder heraus bewegt werden. Hierzu sind Raumzonen definiert, denen eine Bewegungsrichtung zugeordnet ist.

Eine erste Raumzone Z1 erstreckt sich vom Bildschirm weg bis zu einem Abstand von etwa 0,1 m. Eine zweite Raumzone Z2 definiert den Raumabstand von 0,1 bis 0,2 m vor der Anzeigeeinrichtung. Eine dritte Raumzone ist in einem Abstand von 0,2 bis 0,3 m vor der Anzeigeeinrichtung definiert.

Befindet sich die Hand mit ihrer Spitze in der ersten Raumzone Z1, so wird die Kartenansicht in die Tiefe des Raumes hinein bewegt. Der aktuelle virtuelle Standpunkt wird daher, beispielsweise entlang einer Straße, weiterbewegt. Auf diese Weise kann eine Straße nach interessierenden Punkten (points of interest), beispielsweise Sehenswürdigkeiten, Kirchen, Museen, Tankstellen, Restaurants, Hotels, Geschäfte und dergleichen abgesucht werden, ohne die Straße vorher wirklich befahren oder begehen zu müssen. In gleicher Weise kann eine vom Navigationsgerät berechnete Route vorher virtuell abgefahren werden um festzustellen, ob diese Route den Erwartungen des Benutzers entspricht.

Hält der Benutzer seine Hand in der zweiten Raumzone Z2, so wird die Bewegung in der Tiefe des Raumes gestoppt. Wird dagegen festgestellt, dass sich die Hand in der dritten Raumzone Z3 befindet, so erfolgt eine Rückwärtsbewegung der Kartenansicht, also eine Bewegung aus der Tiefe des Raumes heraus.

Auf diese Weise kann ein Objekt, beispielsweise ein Bauwerk oder ein markantes natürliches Objekt in das Zentrum des Blickfelds bewegt werden. Dieses Objekt kann dann entweder mit einer Geste, beispielsweise dem Abwinkeln eines Fingers oder dem Bilden einer Faust oder durch Betätigen einer Taste, eines Knopfes, eines Joysticks, eines Touch Pad oder durch Tippen auf einen Touchscreen ausgewählt werden, um hierzu Informationen abzurufen.

Zeigt der Finger einer Hand nach oben, so wird der virtuelle Standpunkt des Benutzers in die Höhe verlegt. Er erhält somit einen besseren Überblick über ein betrachtetes Gelände. Er kann so zum Beispiel aus der Vogelperspektive ein Schwimmbad oder Sehenswürdigkeiten suchen. Hat er ein Ziel entdeckt kann er sich diesem nähern und es größer dargestellt von allen Blickrichtungen in Augenschein nehmen.

Es wird also ein Instrument oder Browser zum dreidimensionalen Navigieren in einer Kartenansicht verwirklicht. Dadurch wird ein sinnvolles Informationsmanagement in Bezug auf eine unüberschaubare Vielzahl von mit dem Objekt innerhalb der gespeicherten Datenbank und/oder über das Internet verknüpften Informationen zur Verfügung gestellt.

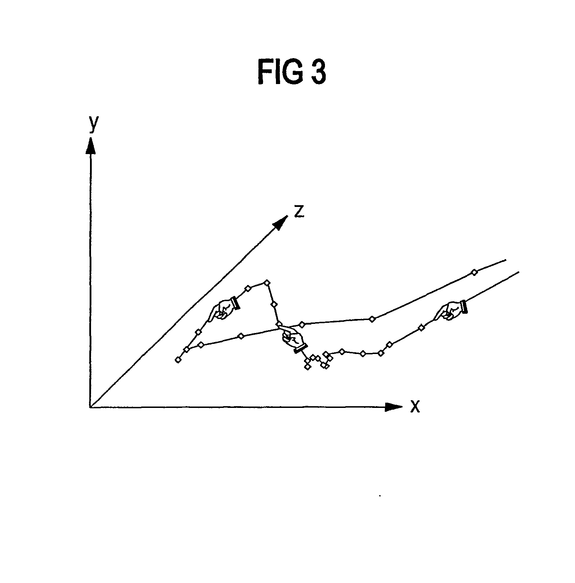

Figur 3 verdeutlicht die Auswertung von Gesten im dreidimensionalen Raum. Es werden die Änderung des Azimutwinkels, des Elevationswinkels, des Rollwinkels und der Translation im Videobild festgehalten und ausgewertet.

In Reaktion auf die erkannte Geste wird die virtuelle Position in der Kartenansicht inkrementell geändert und die dreidimensionale Szene mit der aktuellen, neuen virtuellen Position neu gezeichnet.

Wird ein Auswahlbefehl erkannt, wird das selektierte Objekt markiert und mit dem Objekt verknüpfte Zusatzinformationen werden ausgegeben. Die Zusatzinformationen können entweder direkt auf dem zusammen mit den Objekten auf dem Speichermedium gespeichert sein oder mit dem Objekt über eine in der Datenbank enthaltene Verknüpfung zu einer Internet-Homepage verknüpft sein.

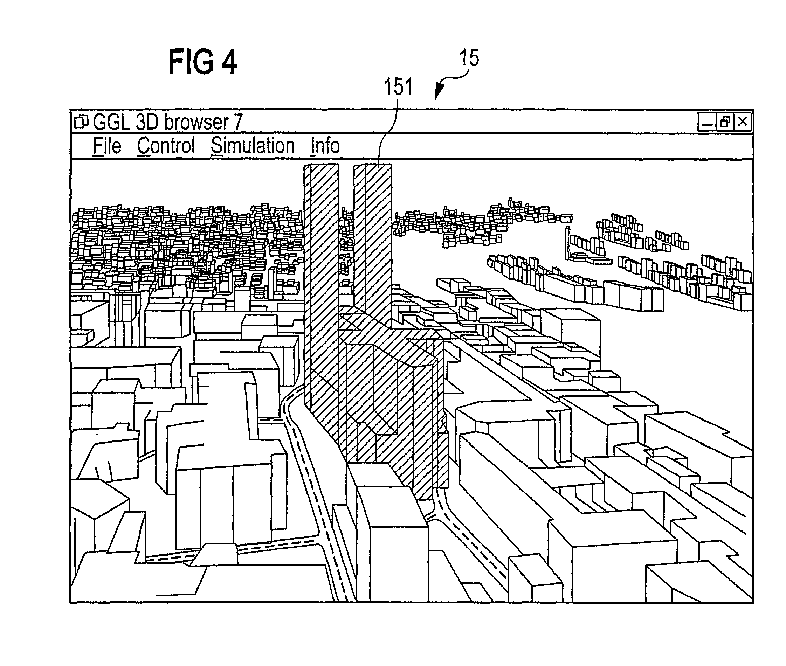

Figur 4 zeigt eine räumliche, dreidimensionale Kartenansicht 15 mit einem solchen ausgewählten Objekt 151. Hierbei handelt es sich um eine Kirche.

Zum Gewinnen der dreidimensionalen Kartendarstellung werden zweidimensionale Straßenkartendaten einer Straßenkarten-Datenbank mit einem Netzwerk aus Straßensegmenten mit dreidimensionalen Daten einer Geo-Datenbank verknüpft. Die Straßensegmente sind durch Knoten miteinander verbunden. Dem Knoten sind Geokoordinaten zugeordnet. Zu diesen Knoten eines auszugebenden Straßensegments wird jeweils ein zugehöriger Punkt der dreidimensionalen Daten ermittelt. Die Straßensegmente werden zusammen mit den in den 3D-Daten ermittelten Punkten eingetragen.

Die Daten der Geo-Datenbank werden mittels Luftbildaufnahmen gewonnen. Die einzelnen Aufnahmen werden in Vektorgrafiken umgewandelt.

Objekte, zu denen Zusatzinformationen abrufbar sind, können in der Kartenansicht durch besondere Zeichen markiert sein.

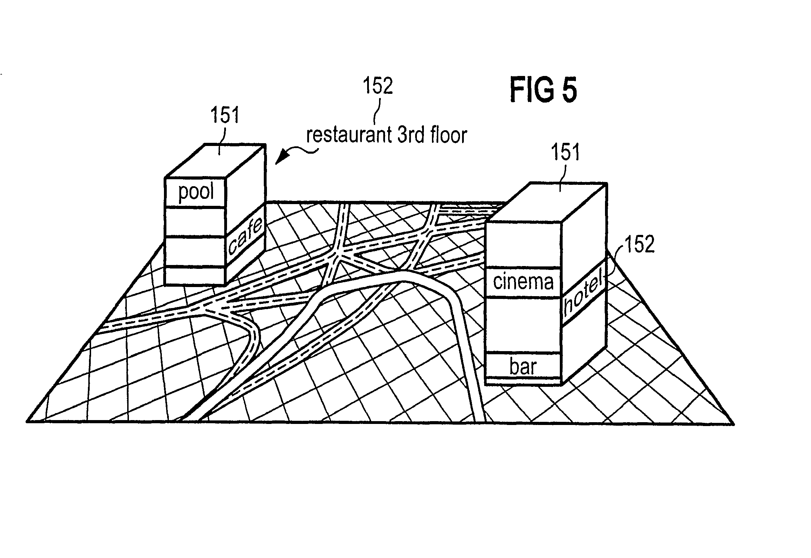

Figur 5 veranschaulicht die räumliche Zuordnung von in der Datenbank gespeicherten Daten 152 zu mehreren gleichzeitig ausgewählten grafischen Objekten 151.

Es wird die Position von zwei Gebäuden in einer Kartenansicht gezeigt. Ferner ist dargestellt, wo sich innerhalb der Gebäude bestimmte Einrichtungen befinden. So ist beim linken Gebäude erkennbar, dass sich im Erdgeschoss auf der rechten Seite ein Cafe befindet. Zusätzlich ist im obersten Stock in der Gebäudefront ein Billardsalon eingetragen. Auf der nicht erkennbaren Rückseite des Gebäudes ist mittels eines Pfeils auf ein Restaurant im dritten Stock hingewiesen.

Zusätzlich können durch entsprechende Links auf die entsprechenden Homepages im Internet zusätzliche Informationen zu den Einrichtungen abgerufen werden. So ist es z. B. möglich die Belegung eines Hotels oder freie Tische in einem Restaurant abzufragen. Hierzu kann eine dreidimensionale Ansicht der Zimmer des Hotels oder der Gaststube des Restaurants angezeigt werden. Üblicherweise befindet sich auf der Homepage eine Verknüpfung mit einer zugehörigen E-Mail-Adresse. Auf diese Weise kann eine Reservierung im Hotel oder in der Gaststätte vorgenommen werden. Hierzu genügt alleine die Navigation in einer Kartenansicht. Der Name oder die Homepage des Kontaktpartners müssen nicht bekannt sein. Es reicht also der visuelle Kontakt in einer virtuellen Kartendarstellung um in Interaktion mit einem Dritten treten zu können.

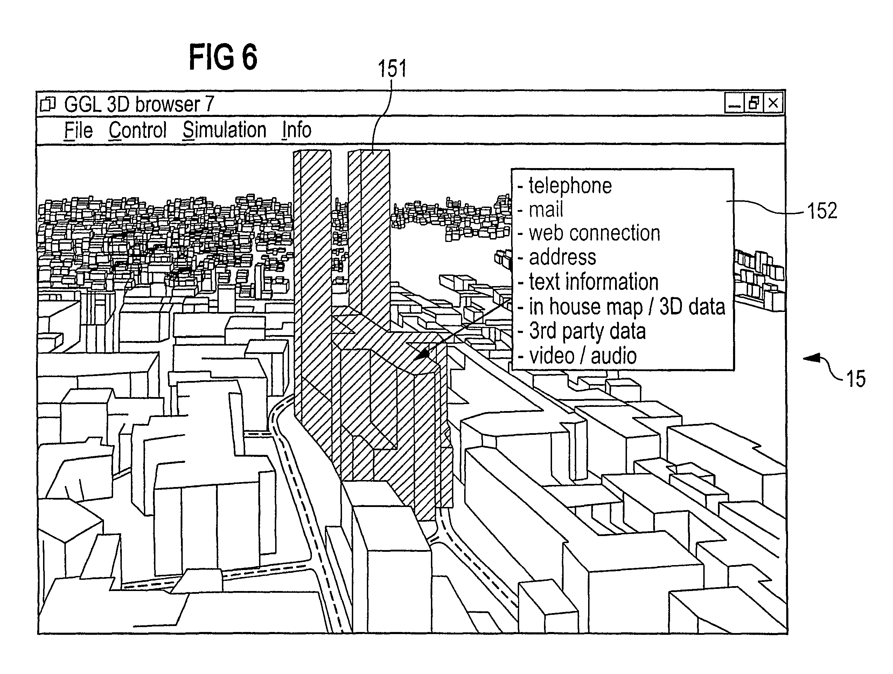

Figur 6 zeigt ein in einer Kartenansicht 15 ausgewähltes grafisches, dreidimensionales Objekt 151, nämlich ein Gebäude. Nach Selektierung des Objekts 151 wird automatisch eine Menü ausgegeben, in dem die Art der für das Objekt zur Verfügung stehenden Daten und Informationen angegeben ist. Diese Umfassen eine Telefonnummer, eine Email-Adresse, eine Adresse im Internet, eine Postadresse, beschreibende Textinformation zum Objekt, eine dreidimensionale Innenansicht des Gebäudes, Daten Dritter, die zum Gebäude hinterlegt sind, beispielsweise Werbung, sowie Video- und Audio-Information. Nach Eingabe eines der Menüpunkte wird die zugehörige Information ausgegeben.

## Patentansprüche

1. Verfahren zum Abfragen von Zielinformation innerhalb einer auf einer Anzeigeeinrichtung dargestellten Kartenansicht (15), mit den Schritten:
- auf eine Benutzereingabe wird eine Kartenansicht (15) in eine Richtung bewegt, um Daten aufzufinden, die mit einem dreidimensionalen Objekt (151) verknüpft sind,
- ein angezeigtes, dreidimensionales Objekt (151) wird in der Kartenansicht (15) aufgrund einer Benutzereingabe ausgewählt,
- mit dem ausgewählten Objekt (151) verknüpfte, in einer Datenbank (19) gespeicherte Daten werden ausgegeben, wobei das dreidimensionale Objekt (151) ein Gebäude ist, **dadurch gekennzeichnet, dass** eine Innenansicht des Gebäudes ausgegeben wird.

2. Verfahren nach dem vorhergehenden Anspruch, **dadurch gekennzeichnet, dass** die verknüpften Daten in der Kartenansicht (15) wiedergegeben werden und dem ausgewählten, dreidimensionalen Objekt zugeordnet ausgegeben werden.

3. Verfahren nach einem der vorhergehenden Ansprüche, **dadurch gekennzeichnet, dass** zu dem dreidimensionalen Objekt (151) Daten aus dem Internet abgerufen werden.

4. Verfahren nach einem der vorhergehenden Ansprüche, **dadurch gekennzeichnet, dass** die zu dem Objekt (151) abgerufenen Daten (152) eine Telekommunikationsadresse aufweisen, und dass auf eine Auswahl der Telekommunikationsadresse ein Telekommunikationskontakt zu der Telekommunikationsadresse hergestellt wird.

5. Verfahren nach einem der vorhergehenden Ansprüche, **dadurch gekennzeichnet, dass** zum Navigieren in einer auf einer Anzeigeeinrichtung (14) wiedergegebenen Kartenansicht (15)
- Gesten eines Benutzers erfasst und ausgewertet werden,
- die Kartenansicht (15) in die Richtung bewegt wird, in die der Benutzer deutet.

6. Verfahren nach dem vorhergehenden Anspruch, **dadurch gekennzeichnet, dass** definierte Raumzonen (Z1 - Z3) bestimmten Bewegungsrichtungen der Kartenansicht (15) entsprechen.

7. Verfahren nach dem vorhergehenden Anspruch, **dadurch gekennzeichnet, dass** die Geschwindigkeit, mit der die Kartenansicht (15) bewegt wird, **dadurch** bestimmt wird, in welchem Bereich einer der Raumzonen (Z1 - Z3) eine Hand des Benutzers identifiziert wird.

8. Verfahren nach einem der vorhergehenden Ansprüche 5 bis 7, **dadurch gekennzeichnet, dass** die Geschwindigkeit, mit der die Kartenansicht (15) bewegt wird, von der Intensität oder Geschwindigkeit abhängt, mit der die Geste ausgeführt wird.

9. Verfahren nach einem der vorhergehenden Ansprüche, **dadurch gekennzeichnet, dass** die Auswahl eines Objekts (151) aufgrund der Interpretation von Gesten eines Benutzers erfolgt.

10. Verfahren nach einem der vorhergehenden Ansprüche 5 bis 9, **dadurch gekennzeichnet, dass** ein auf der Kartenansicht (15) ausgewähltes Objekt (151) als Zielkoordinate für eine Routenberechnung verwendet wird.

11. Verfahren nach einem der vorhergehenden Ansprüche 5 bis 10, **dadurch gekennzeichnet, dass** wenigstens eine ausgewählte Kartenansicht (15) auf ein tragbares Datenverarbeitungsgerät (3) ausgegeben wird.

12. Navigationsgerät, angepasst zur Durchführung des Verfahrens nach einem der vorhergehenden Ansprüche, das aufweist:
- eine Anzeigeeinrichtung (14),
- eine Kamera (2) zum Erfassen von Gesten eines Benutzers,
- einen Prozessor (11) zur Berechnung von Leitinformationen und von Kartenansichten (15) in Abhängigkeit von Gesten eines Benutzers.

## Claims

1. Method for requesting destination information within a map view (15) shown on a display device, having the following steps:
- following a user input, a map view (15) is moved in one direction in order to find data which are linked to a three-dimensional object (151),
- a displayed, three-dimensional object (151) is selected in the map view (15) on the basis of a user input,
- data linked to the selected object (151) and stored in a database (19) are output in which the three-dimensional object (151) is a building, **characterized in that** an interior view of the building is output.

2. Method according to the preceding claim, **characterized in that** the linked data are reproduced in the map view (15) and are output in association with the selected, three-dimensional object (151).

3. Method according to one of the preceding claims, **characterized in that** data relating to the three-dimensional object (151) are retrieved from the Internet.

4. Method according to one of the preceding claims, **characterized in that** the data (152) retrieved for the object (151) feature a telecommunications address, and **in that** selection of the telecommunications address is followed by telecommunications contact being set up to the telecommunications address.

5. Method according to one of the preceding claims, **characterized in that**, for navigating in a map view (15) reproduced on a display device (14),
- a user's gestures are detected and evaluated,
- the map view (15) is moved in the direction in which the user is pointing.

6. Method according to the preceding claim, **characterized in that** defined space zones (Z1-Z3) correspond to particular directions of movement of the map view (15).

7. Method according to the preceding claim, **characterized in that** the speed at which the map view (15) is moved is determined by that region in one of the space zones (Z1-Z3) in which a hand of the user is identified.

8. Method according to one of the preceding claims 5 to 7, **characterized in that** the speed at which the map view (15) is moved is dependent on the intensity or speed with which the gesture is made.

9. Method according to one of the preceding claims, **characterized in that** an object (151) is selected on the basis of the interpretation of gestures from a user.

10. Method according to one of the preceding claims 5 to 9, **characterized in that** an object (151) selected on the map view (15) is used as a destination coordinate for route calculation.

11. Method according to one of the preceding claims 5 to 10, **characterized in that** at least one selected map view (15) is output on a portable data processing unit (3).

12. Navigation unit, adapted for the realisation of the method according to one of the preceding claims, which has:
- a display device (14),
- a camera (2) for detecting gestures from a user,
- a processor (11) for calculating control information and map views (15) on the basis of gestures from a user

## Revendications

1. Procédé permettant de consulter une information de destination dans la représentation (15) d'une carte géographique représentée sur un dispositif d'affichage, comprenant les étapes suivantes:
- à la suite d'une saisie par l'utilisateur, une représentation (15) de carte géographique est déplacée dans une direction pour trouver des données qui sont enchaînées avec un objet en trois dimensions (151),
- un objet en trois dimensions (151) affiché est sélectionné sur la représentation (15) de carte géographique à la suite d'une saisie par l'utilisateur,
- des données mémorisées dans une banque de données (19) et enchaînées avec l'objet (151) sélectionné sont éditées, l'objet en trois dimensions (151) étant un bâtiment,
**caractérisé par le fait qu'**une vue intérieure du bâtiment est éditée.

2. Procédé selon l'une des revendications précédentes, **caractérisé par le fait que** les données enchaînées sont reproduites dans la représentation (15) de la carte géographique et éditées en affectation avec l'objet en trois dimensions sélectionné.

3. Procédé selon l'une des revendications précédentes, **caractérisé par le fait que** les données relatives à l'objet en trois dimensions (151) sont appelées sur Internet.

4. Procédé selon l'une des revendications précédentes, **caractérisé par le fait que** les données (152) appelées relatives à l'objet (151) comportent une adresse de télécommunication et que, sur une sélection de l'adresse de télécommunication, une liaison de télécommunication est établie avec l'adresse de télécommunication.

5. Procédé selon l'une des revendications précédentes, **caractérisé par le fait que**, pour naviguer sur une représentation (15) de carte géographique reproduite sur un dispositif d'affichage (14),
- les gestes d'un utilisateur sont détectés et analysés,
- la représentation (15) de carte géographique est déplacée dans la direction indiquée par l'utilisateur.

6. Procédé selon l'une des revendications précédentes, **caractérisé par le fait que** des zones spatiales définies (Z1 - Z3) correspondent à des directions de déplacement définies de la représentation (15) de carte géographique.

7. Procédé selon l'une des revendications précédentes, **caractérisé par le fait que** la vitesse, avec laquelle la représentation (15) de la carte géographique est déplacée, dépend de la partie de l'une des zones spatiales (Z1 - Z3) dans laquelle une main de l'utilisateur est identifiée.

8. Procédé selon l'une des revendications précédentes 5 à 7, **caractérisé par le fait que** la vitesse, avec laquelle la représentation (15) de la carte géographique est déplacée, dépend de l'intensité ou de la vitesse avec laquelle le geste est exécuté.

9. Procédé selon l'une des revendications précédentes, **caractérisé par le fait que** la sélection d'un objet (151) est faite sur la base de l'interprétation de gestes d'un utilisateur.

10. Procédé selon l'une des revendications précédentes 5 à 9, **caractérisé par le fait qu'**un objet (151) sélectionné sur la représentation (15) de la carte géographique est utilisé comme coordonnées de destination pour un calcul d'itinéraire.

11. Procédé selon l'une des revendications précédentes 5 à 10, **caractérisé par le fait que** au moins une représentation (15) sélectionnée de la carte géographique est éditée sur un appareil de traitement de données (3) portable.

12. Appareil de navigation adapté à l'exécution du procédé selon l'une des revendications précédentes et comportant:
- un dispositif d'affichage (14),
- une caméra (2) permettant de détecter les gestes d'un utilisateur,
- un processeur (11) permettant de calculer des informations de guidage et des représentations (15) de cartes géographiques en fonction des gestes d'un utilisateur.
